(19) Europäisches Patentamt
European Patent Office
Office européen des brevets

(11) EP 3 549 996 A1

# (12) EUROPÄISCHE PATENTANMELDUNG

(43) Veröffentlichungstag:
**09.10.2019 Patentblatt 2019/41**

(51) Int Cl.:
***C10G 2/00*** *(2006.01)* ***C07C 1/04*** *(2006.01)*

(21) Anmeldenummer: **18165489.8**

(22) Anmeldetag: **03.04.2018**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Evonik Degussa GmbH**
**45128 Essen (DE)**

(72) Erfinder: **Die Erfindernennung liegt noch nicht vor**

## (54) OLEFINE DURCH FISCHER-TROPSCH-SYNTHESE

(57) Die vorliegende Erfindung betrifft ein Fischer-Tropsch-Verfahren zur Synthese von Kohlenwasserstoffen, umfassend das Inkontaktbringen von Synthesegas mit mindestens einem Katalysator, wobei der Katalysator Co und Mn sowie einen oxidischen Träger enthält.

EP 3 549 996 A1

## Beschreibung

Die vorliegende Erfindung betrifft ein Fischer-Tropsch-Verfahren zur Synthese von Kohlenwasserstoffen, umfassend das Inkontaktbringen von Synthesegas mit mindestens einem Katalysator, wobei der Katalysator Co und Mn sowie einen oxidischen Träger enthält.

Bei dem als Fischer-Tropsch-Synthese (FTS) bekannten Verfahren werden als Reaktionsgase Mischungen aus Kohlenmonoxid und Wasserstoff, allgemein bekannt als Synthesegas, an einem heterogenen Katalysator bei erhöhter Temperatur und erhöhtem Druck zu einem Gemisch aus niederen gasförmigen und höheren flüssigen Kohlenwasserstoffen, bestehend aus Alkanen, Alkenen und Alkanolen gemäß

$$nCO + (2n + 1)H_2 \rightarrow C_nH_{2n}+_2+nH_2O \text{ (Alkane)}$$

$$nCO + (2n)H_2 \rightarrow C_nH_{2n} + nH_2O \text{ (Alkene)}$$

$$nCO + (2n)H_2 \rightarrow C_nH_{2n+1}OH + (n - 1)H_2O \text{ (Alkanole) umgesetzt.}$$

Das Synthesegas als Edukt der Fischer-Tropsch-Synthese wird dafür großtechnisch aus anderen kohlenstoffhaltigen Verbindungen, wie z. B. Erdgas oder Kohle, in neuerer Zeit fast ausschließlich Erdgas, durch z. B. Vergasung, partielle Oxidation oder Dampfreformierung gewonnen.

Technisch kommen feste Katalysatoren auf Basis von Eisen oder Kobalt zur Anwendung. Kobalt wird meist auf Katalysatorträgern aus Metalloxiden, beispielsweise von Aluminium-, Titan- oder Siliziumoxiden, aufgebracht. Im Gegensatz dazu wird Eisen als Vollkontakt eingesetzt. Beide Katalysatortypen enthalten in der Regel noch Promotoren.

Prinzipiell werden bei der Fischer-Tropsch-Synthese je nach Reaktionstemperatur zwei verschiedene Verfahren unterschieden.

Die sogenannte Tieftemperatur-Fischer-Tropsch-Synthese (LTFT; Low Temperature Fischer-Tropsch) wird technisch bei 200 bis 250 °C und Drücken größer 20 bar durchgeführt.

In der LTFT werden fast ausschließlich kobaltbasierte Katalysatoren verwendet. Diese haben erheblich längere Standzeiten als eisenbasierte Katalysatoren und werden entweder in Blasensäulen- oder Rohrbündelreaktoren eingesetzt. Das von kobaltbasierten Katalysatoren erzeugte Produkt besteht dabei bevorzugt aus langkettigen n-Paraffinen.

Die Hochtemperatur-Fischer-Tropsch-Synthese (HTFT; High Temperature Fischer-Tropsch) wird bei etwa 340 °C und bei ca. 25 bar durchgeführt. Bei beiden Verfahren wird nach dem heutigem Stand der Technik eine unterschiedliche Produktzusammensetzung erhalten.

Zielprodukte der HTFT sind lineare kurzkettige Kohlenwasserstoffe mit einem hohen Olefinanteil, typischerweise im Siedebereich von Benzin. Als Koppelprodukte werden, wie bei der LTFT, Wasser und üblicherweise v.a. bei Verwendung von Eisen als Katalysator zusätzlich erhebliche Mengen an $CO_2$ gebildet. Da Co-basierte Katalysatoren bei hohen Temperaturen eine sehr hohe Selektivität zu Methan und niedrige Selektivitäten zu Olefinen aufweisen, werden diese bei der HTFT nicht eingesetzt. Eisen-basierte Katalysatoren begünstigen allerdings bei hohen Temperaturen die Bildung und Abscheidung von Kohlenstoff, was zu kurzen Standzeiten führt. Das hat zur Folge, dass der Fe-Katalysator häufig erneuert werden muss. Dies macht nach heutigem Stand der Technik den Einsatz von Wirbelbettreaktoren notwendig, um im laufenden Betrieb den Katalysator auszutauschen. Wirbelschichtreaktoren ermöglichen zwar durch die gute Durchmischung eine gute Wärmeabfuhr, weisen aber auch erhebliche Nachteile gegenüber den bei der LTFT eingesetzten Reaktortypen auf: Die gute Durchmischung führt zu niedrigeren Eduktkonzentrationen im Reaktor, was die Reaktionsrate verringert. Die Bewegung der Katalysatorpartikel führt außerdem zu Abrieb an Katalysator und Reaktorwand.

Aufgabe der vorliegenden Erfindung ist die Bereitstellung eines alternativen Verfahrens, das analog der Fischer-Tropsch-Synthese zu Produkten, vor allem aus linearen kurzkettigen Kohlenwasserstoffen mit einem hohen Olefinanteil, führt.

Diese Aufgabe wird durch Verfahren gemäß der vorliegenden Erfindung gelöst.

Gegenstand der vorliegenden Erfindung ist demgemäß ein Fischer-Tropsch-Verfahren zur Synthese von Kohlenwasserstoffen, umfassend das Inkontaktbringen von Synthesegas mit mindestens einem Katalysator unter einem Gesamtdruck zwischen 1 und 100 bar, bei einer Temperatur zwischen 180 und 250 °C, wobei der Katalysator Co und Mn sowie einen oxidischen Träger enthält.

Es hat sich überraschend gezeigt, dass mit dem Einsatz eines Co-basierten Katalysators, der unter LTFT-typischen Bedingungen Kohlenwasserstoffe erzeugt, die in ihrer Zusammensetzung dem Produkt der HTFT sehr ähnlich sind. Dies war für den Fachmann nicht zu erwarten.

Im Gegensatz zur Fe-katalysierten HTFT entsteht dabei aber kaum unerwünschtes $CO_2$. Damit kann in Blasensäulen- oder Rohrbündelreaktoren ein Produkt erzeugt werden, das nach derzeitigem Stand der Technik bisher nur in Wirbelbettreaktoren erzeugt werden kann.

Wesentlich im Rahmen der vorliegenden Erfindung ist der eingesetzte Katalysator, der Co und Mn sowie einen oxidischen Träger enthält. Dabei ist erfindungswesentlich, dass bei den eingesetzten Katalysatoren auf den Einsatz von Edelmetallen als Reduktionspromotoren verzichtet wird. Der eingesetzte Katalysator enthält damit neben Co und Mn keine weiteren katalytisch aktiven Metalle oder Promotoren. Dies führt zu einer deutlichen Vergünstigung und Vereinfachung der eingesetzten Katalysatoren.

Als oxidische Träger eignen sich vorzugsweise poröses Aluminiumoxid oder Siliziumoxid, wobei Siliziumoxid ganz besonders bevorzugt ist. In einer besonders bevorzugten Ausführungsform besteht der erfindungsgemäße eingesetzte Katalysator nur aus Co, Mn und Siliziumoxid.

Der eingesetzte Co-Katalysator wird über Nassimprägnation von entsprechenden Co- und Mn-Salzen in einen entsprechenden porösen Träger hergestellt. Bevorzugt werden als Co- und Mn-Salze Co-Nitrat und Mn-Nitrat eingesetzt, insbesondere als wässrige Lösungen. Die so erhaltenen Präkatalysatoren werden dann anschließend zu den erfindungsgemäß eingesetzten Katalysatoren kalziniert.
Die Kalzination erfolgt bei Temperaturen von 300 bis 600 °C, vorzugsweise bei 300 bis 400 °C und insbesondere bei Temperaturen um 350 °C.

In den erfindungsgemäßen Katalysatoren liegt der Co-Gehalt bei 5 bis 50 Gew.-%, vorzugsweise bei 5 bis 30 Gew.-%, insbesondere 10-30 Gew.-%, bezogen auf den Katalysator und bestimmt als Metall.
Der Gehalt an Mn beträgt 5 bis 55 Gew.-%, vorzugsweise 10 bis 30 Gew.-%, bezogen auf den Gehalt an Co und bestimmt als Metall.

Bei den erfindungsgemäß eingesetzten Reaktoren handelt es sich entweder um Blasensäulensuspensionsreaktoren oder Festbettreaktoren mit oder ohne Kreislaufführung, die bei Gesamtdrücken bis 100 bar und erhöhten Temperaturen betrieben werden können. Diese Reaktoren können mit Synthesegas, bestehend aus $H_2$ und CO, durchströmt werden. Dabei kann das Verhältnis der beiden Gase ($H_2$ zu CO) am Reaktoreingang im Bereich von 0,3 : 1 bis 10 : 1, vorzugsweise 0,5 : 1 bis 4:1 und insbesondere bei ungefähr 2 : 1 variiert werden. Auch kann dem Eduktgas als Verdünnung eine inerte Komponente wie z. B. $N_2$ oder ein Edelgas beigemischt werden.

Es hat sich im Rahmen der vorliegenden Erfindung überraschend gezeigt, dass Bedingungen, die denen der LTFT entsprechen, also um die 200 °C und Drücken im niedrigen zweistelligen (in bar) Bereich, Produkte erhalten werden, die in der Zusammensetzung annähernd denen der HTFT entsprechen.

Ziel ist ein möglichst olefinreiches Produkt mit möglichst geringem Anteil an Methan und $CO_2$. In erster Näherung kann die Verteilung der Kettenlängen mit der Verteilung von Produkten einer Polymerisationsreaktion nach Schulz-Flory ((SF), häufig für die Fischer-Tropsch-Synthese auch als Anderson-Schulz-Flory-Verteilung (ASF) bezeichnet) beschrieben werden:

$$X_i = \frac{n_i}{n_{tot}} = (1 - \alpha) \cdot \alpha^{i-1}$$

wobei $n_i$ für die Stoffmenge der Komponente i (also z.B. Butan, wenn i=4), $n_{tot}$ die insgesamt gebildete Stoffmenge an Produkt und $\alpha$ für die Kettenwachstumswahrscheinlichkeit ($0 < \alpha < 1$) steht. Je höher der Wert für $\alpha$ ist, desto höher ist der Anteil an langkettigen Verbindungen im Produkt.
In der FTS wird oft auch die massenbezogene Verteilung gewählt:

$$w_i = \frac{m_i}{m_{tot}} = i \cdot (1 - \alpha)^2 \cdot \alpha^{i-1}$$

wobei $m_i$ für die Masse der Komponente i (also z.B. Butan, wenn i=4), $m_{tot}$ die insgesamt gebildete Masse an Produkt und $\alpha$ für die Kettenwachstumswahrscheinlichkeit ($0 < \alpha < 1$) steht. Die massenbezogene Verteilung berechnet sich mit der Annahme einer Molmasse von 14 g/mol für eine Methylengruppe (oder 12 g/mol für Kohlenstoff) direkt aus der oben angegebenen molaren Verteilung.

Abbildung 1 zeigt die aus den genannten Formeln berechneten Produktverteilungen in Abhängigkeit von der Kettenwachstumswahrscheinlichkeit $\alpha$.

Bei der Cobalt katalysierten FTS entsteht allerdings typischerweise mehr Methan und weniger Ethan/Ethen als durch die (A)SF berechnet.

Im Rahmen der vorliegenden Erfindung ist die Kettenwachstumswahrscheinlichkeit $\alpha$ im Bereich von 0,6 - 0,8, vorzugsweise 0,65 -0,75 und insbesondere bevorzugt bei rund 0,7.
Dabei kann eine hohe Selektivität zu Olefinen, bevorzugt 1-Olefinen, wie sie z. B. in der HTFT entstehen, oder sogar eine höhere Selektivität erreicht werden. Erfindungsgemäße Bedingungen für die Durchführung des im Rahmen der vorliegenden Erfindung beschriebenen Verfahrens finden sich exemplarisch in den nachfolgend genannten Beispielen.

Die erfindungsgemäß hergestellten Produkte eignen sich in besonderer Weise für den Einsatz in weiteren sich anschließenden Syntheseprozessen. Insbesondere eignen sich die erhaltenen Produkte für den Einsatz als Ausgangsstoff für Hydroformylierungen.

Somit ist ein weiterer Gegenstand der vorliegenden Erfindung ein Verfahren zur Herstellung oxygenierter Produkte, insbesondere Aldehyde und Alkohole, umfassend die Verfahrensschritte:

a) Durchführen eines Fischer-Tropsch-Verfahrens zur Synthese von Kohlenwasserstoffen, umfassend das Inkontaktbringen von Synthesegas mit mindestens einem Katalysator unter einem Gesamtdruck zwischen 1 und 100 bar, bei einer Temperatur zwischen 180 und 250 °C, wobei der Katalysator Co und Mn sowie einen oxidischen Träger enthält,

b) gegebenenfalls Aufreinigung der erhaltenen Kohlenwasserstoffe

c) Durchführen einer Hydroformylierung mit Kohlenmonoxid und Wasserstoff in Gegenwart einer katalytisch wirksamen Menge eines Hydroformylierungskatalysators unter Erhalt der oxygenierten Produkte.

In einer ersten bevorzugten Ausführungsform der vorliegenden Erfindung können die Kohlenwasserstoffe des in a) durchgeführten Fischer-Tropsch-Verfahrens direkt in der Hydroformylierungsstufe c) ohne irgendeine wesentliche Reinigung oder dessen weiteres Verarbeiten unter Entfernen unerwünschter Bestandteile wie etwa Nichtolefinen verwendet werden.

In einer alternativen bevorzugten Ausführungsform der vorliegenden Erfindung können die Kohlenwasserstoffe aus der Fischer-Tropsch-Reaktionsstufe a) unter Entfernen unerwünschter Bestandteile daraus und/oder Abtrennen eines besonderen olefinischen Bestandteils daraus aufgearbeitet werden. Diese Aufarbeitung umfasst typischerweise eine Destillation und kann eine herkömmliche, Vakuum-, extraktive oder reaktive Destillation umfassen. Stattdessen oder zusätzlich kann die Aufarbeitung Techniken wie etwa Membrantrennung umfassen. Olefingehalt und -verteilung des Einsatzmaterials für die Hydroformylierungsstufe können so entsprechend den geforderten sauerstoffhaltigen Produkten maßgeschneidert werden. So kann ein Olefinprodukt mit einer bestimmten oder mehrfachen Kohlenstoffzahl aus der Fischer-Tropsch-Stufe zum Herstellen engerer "Schnitte", in denen lineare $\alpha$-Olefine konzentriert sind, weiter verarbeitet werden. Bei Einsatz derartiger Schnitte als Ausgangsmaterial für die Hydroformylierung, können so Hydroformylierungsprodukte mit erhöhter Linearität erhalten werden.

Das für die Hydroformylierung erforderliche Kohlenmonoxid sowie der Wasserstoff liegen typischerweise in der Form von Synthesegas vor, das dann dasselbe wie das in der Fischer-Tropsch-Stufe verwendete sein kann.

Entsprechende Hydroformulierungsverfahren sind dem Fachmann bekannt und beispielsweise in Hydroformylation Fundaments, Procceses and Applications in Organic Synthesis Volume 1 & 2 Auflage 1, Franke, Börner, Willey VCH Verlag GmbH & Co, Weinheim beschrieben.

Man arbeitet in der Regel mit Rhodium- oder Kobaltkatalysatoren sowie mit oder ohne komplexstabilisierenden Zusätzen, wie organischen Phosphinen oder Phosphiten. Die Temperaturen und Drücke können, je nach Katalysator oder Olefin, in weiten Grenzen variieren. Eine Beschreibung der Hydroformylierung von Olefinen findet sich z. B. bei J. Falbe, New Syntheses with Carbon Monoxide, Springer-Verlag, Heidelberg-New York, 1980, Seite 99 ff. sowie bei Kirk-Othmer, Encyclopedia of Chemical Technology, Band 17, 4. Auflage, John Wiley & Sons, Seiten 902 bis 919 (1996).

In einer ersten bevorzugten Ausführungsform der vorliegenden Erfindung erfolgt die Hydroformylierung nach dem in WO 2009/080396 beschriebenen Verfahren. Hierbei handelt es sich um ein einstufiges kontinuierliches Verfahren zur Hydroformylierung in Gegenwart von unmodifizierten Kobaltkatalysatoren in einem Prozess, bei dem bei Vorliegen einer wässrigen und einer organischen Phase Katalysatorbildung, Katalysatorextraktion und Hydroformylierung im gleichen Reaktor erfolgt. Dabei wird eine wässrige Kobaltsalzlösung in den Reaktor eingespeist, als wässrige Phase mit dem flüssigen Reaktionsgemisch und der Gasphase aus dem Reaktor ausgetragen und zur Konstanthaltung des Stands der wässrigen Sumpfphase kontinuierlich ein Teil der wässrigen Sumpfphase aus dem Reaktor gefahren. Dieses Verfahren eignet sich hier insbesondere, da damit auch Olefine mit mindestens 5 Kohlenstoffatomen zu den entsprechenden Aldehyden und/oder Alkoholen umgesetzt werden können.

Bei dem beschriebenen Verfahren erfolgt die Bildung des aktiven Kobaltkatalysators aus einer wässrigen Kobaltsalzlösung, Extraktion des aktiven Katalysators aus der wässrigen Phase in die organische Phase und Hydroformylierung gleichzeitig im Reaktor, wobei mehr wässrige Kobaltsalzlösung in den Reaktor eingespeist wird, als wässrige Phase mit dem flüssigen Reaktionsgemisch und mit dem überschüssigen Synthesegas zusammen aus dem Reaktor ausgetragen wird. Der Überschuss an wässriger Phase wird durch kontinuierliches Abziehen eines Teils der wässrigen Unterphase entfernt.

Dabei werden 2 bis 99 Massen-%, insbesondere 5 bis 80 Massen-% und ganz besonders 10 bis 60 Massen-% des in den Reaktor mit der Kobaltsalzlösung eingespeisten Wassers durch Abziehen eines Teils der wässrigen Unterphase entfernt.

Bevorzugt werden wässrige Lösungen von Kobaltsalzen von Carbonsäuren, wie beispielsweise Kobaltformiat oder Kobaltacetat, eingesetzt. Es können auch Lösungen, die mehr als eine Kobaltverbindung enthalten, eingesetzt

werden. Vorzugsweise ist die Kobaltlösung eine solche, die bei einer besonders bevorzugten Ausführung des Gesamtprozesses, nämlich bei der oxidativen Entkobaltung des Hydroformylierungsautrags, anfällt. Diese Lösung, die auch Ameisensäure enthält, kann direkt oder nach Aufkonzentrierung oder nach Reduzierung des Ameisensäuregehalts, beispielsweise wie in DE 100 09 207 beschrieben, eingesetzt werden.

Die Hydroformylierung wird im Temperaturbereich von 110 bis 250 °C, bevorzugt im Temperaturbereich von 130 bis 220 °C, ganz besonders bevorzugt im Temperaturbereich von 160 °C bis 190 °C durchgeführt.

Der Reaktionsdruck liegt im Bereich von 100 bis 400 bar, insbesondere im Bereich von 150 bis 300 bar. Im eingesetzten Synthesegas, dem Gemisch aus Wasserstoff und Kohlenstoffmonoxid, liegt das Volumenverhältnis von Wasserstoff zu Kohlenstoffmonoxid vorzugsweise im Bereich 1 zu 2 bis 2 zu 1

In einer weiteren Ausführungsform der vorliegenden Erfindung kann die Hydroformylierung gemäß dem in WO 2017/080690 beschriebenen Verfahren erfolgen.

Dabei wird in der Hydroformylierung ein Katalysatorsystem eingesetzt, das Rhodium als Zentralatom enthält und mit dem Liganden (1) komplexiert ist:

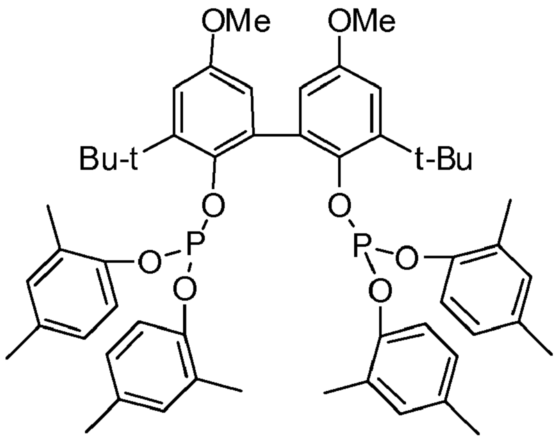

(1)

Die IUPAC Bezeichnung von Ligand (1) ist 3,3'-di-tert-butyl-5,5'-dimethoxy-[1,1'-biphenyl]-2,2'-diyltetrakis(2,4-dimethylphenyl)bis(phosphite).

Die Hydroformylierung erfolgt insbesondere bei einer Temperatur zwischen 120 °C und 140 °C. Der Druck liegt vorzugsweise zwischen $15*10^5$ Pa und $25*10^5$ Pa.

Um die Betriebsdauer zu verlängern, wird die Hydroformylierung in Gegenwart eines organischen Amins der Formel (2) durchgeführt,

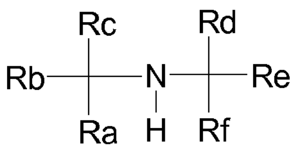

(2)

worin Ra, Rb, Rc, Rd, Re und Rf gleiche oder unterschiedliche Kohlenwasserstoffreste darstellen, die auch untereinander verbunden sein können. Das organische Amin weist vorzugsweise zumindest eine 2,2,6,6-Tetramethylpiperidineinheit auf. Konkret kann das organische Amin ein Sebacinsäuredi-4-(2,2,6,6-tetramethylpiperidinyl)-ester sein.

Es wird empfohlen, eine Rhodiumkonzentration im ersten Reaktionsgemisch zwischen 1 Gew.-ppm und 1000 Gew.-ppm einzustellen. Das Ligand/Rhodium-Verhältnis sollte zwischen 1:1 bis 100:1 betragen, wobei neben der Organophosphorverbindung gemäß Formel (1) kein weiterer Ligand als Teil des homogenen Katalysatorsystems vorzusehen ist. Im industriellen Betrieb ist nicht auszuschließen, dass aufgrund von Verunreinigungen andere Organophosphorverbindungen als 3,3'-di-tert-butyl-5,5'-dimethoxy-[1,1'-biphenyl]-2,2'-diyltetrakis(2,4-dimethylphenyl)bis(phosphite) als Teil des Katalysatorsystems an das Rhodium komplexieren. Derartige Verunreinigungen sind aber bei dem angegebenen Ligand/Rhodium-Verhältnis nicht zu berücksichtigen. Diese Angabe bezieht sich einzig auf Ligand (1) und in beabsichtigter Weise muss kein weiterer Ligand vorgesehen sein.

Die Reaktionsgemische der Hydroformylierung werden zweckmäßigerweise vom Katalysator befreit. Wenn ein Kobaltkatalysator verwendet worden ist, kann dies durch Druckentlastung, Oxidation der im Hydroformylierungsgemisch

verbliebenen Kobaltcarbonylverbindungen in Gegenwart von Wasser oder wässriger Säure und Abtrennung der wässrigen Phase geschehen. Entkobaltungsverfahren sind gut bekannt, siehe z. B. J. Falbe, a. a. O., Kirk-Othmer, a. a. O., 164, 175, BASF-Verfahren.

Wenn eine Rhodiumverbindung als Hydroformylierungskatalysator eingesetzt wird, kann man diese z. B. mittels Dünnschichtverdampfung als Destillationsrückstand abtrennen

Auch ohne weitere Ausführungen wird davon ausgegangen, dass ein Fachmann die obige Beschreibung im weitesten Umfang nutzen kann. Die bevorzugten Ausführungsformen und Beispiele sind deswegen lediglich als beschreibende, keinesfalls als in irgendeiner Weise limitierende Offenbarung aufzufassen.

Nachfolgend wird die vorliegende Erfindung anhand eines Beispiels näher erläutert. Alternative Ausführungsformen der vorliegenden Erfindung sind in analoger Weise erhältlich.

**Beispiel 1:**

Katalysatorherstellu ng:

Es wurde ein durch Nassimprägnierung hergestellter Mn promotierter Katalysator verwendet. Der Träger, bestehend aus mesoporösen $SiO_2$ (Aerolyst® 3041), wurde mit einer wässrigen Lösung aus $Co(NO_3)_2$ und $Mn(NO_3)_2$ imprägniert, wobei die Zusammensetzung der Lösung so gewählt wurde, das der spätere frische Katalysator die Zusammensetzung 1,5 Gew.-% Mn und 10 Gew.-% Co, jeweils bezogen auf die Gesamtmasse des Katalysators, aufwies. Nach Trocknen dieses Präkursors wurde dieser in einem vertikalen Röhrenofen mit einer Heizrate von 3 K/min in strömender Luft auf 350 °C aufgeheizt und bei dieser Temperatur 2 h gehalten, um nach dem Abkühlen auf Raumtemperatur den frischen Katalysator zu erhalten.

Reaktorsystem:

Die Aktivierung des Katalysators und die Durchführung der Reaktion wurde in einem Reaktorsystem bestehend aus einer Gaszuführung mit Massendurchflussreglern, dem aus Edelstahl bestehendem Reaktorrohr (Innendurchmesser 14 mm, Außendurchmesser 18 mm), und einem Rückdruckregler durchgeführt. Das Reaktorrohr ist von einem Aluminiumrohr (Innendurchmesser 18 mm, Außendurchmesser 18 cm), welches mit einer Heizmanschette beheizt werden kann, umgeben. Nach Entspannung des Abgases durch den Rückdruckregler auf Umgebungsdruck werden die bei 0 °C flüssigen Produkte in einer mit Eiswasser temperierten Kühlfalle gesammelt und die Kohlenwasserstoffphase offline Gaschromatographisch untersucht. Der Gasstrom, der die Kühlfalle verlässt, wird mit einem Gasstrom bestehend aus 1 vol.-% Cyclopropan in $N_2$ als interner Standard vermischt und in einer Gasanalyse (CO, $H_2$, $CO_2$ $CH_4$) und einem online-GC (KW) analysiert.

Aktivierung des Katalysators und Reaktionsdurchführung:

Die Aktivierung des Katalysators erfolgte direkt vor der Durchführung der Fischer-Tropsch-Synthese in dem oben genannten Reaktorsystem. Der Katalysator wurde als Feinkorn ($d_P < 150\ \mu m$) eingesetzt, um mögliche störende Diffusionseinflüsse zu verhindern. Weiterhin wurde für dieses Beispiel der Katalysator mit unporösem $SiO_2$ - Pulver verdünnt, um mögliche Temperaturgradienten im Festbett auszuschließen.

Zur Aktivierung des Katalysators wurde die Katalysatorschüttung in fließendem Gas bei Umgebungsdruck. zunächst mit 20 vol.-% $H_2$ in $N_2$ mit 3 K/min auf 360 °C aufgeheizt und bei dieser Temperatur 3 h gehalten. Im Anschluss wurde die Schüttung weitere 2 h mit reinem $H_2$ durchströmt und dann in fließenden $H_2$ wieder abgekühlt.

Nach der Aktivierung wurde der Reaktor mit Synthesegas, bestehend aus 2 Teilen $H_2$ und 1 Teil CO, gespült und auf den Betriebsdruck von 33 bar gebracht. Daraufhin wurde das Katalysatorbett langsam auf 220 °C aufgeheizt und zur Erreichung des stationären Zustands 1 Woche bei diesen Bedingungen gehalten. Die Katalysatorbelastung betrug dabei während der gesamten Versuchsdauer 1,8 $l_{STP}\ h^{-1}\ g_{Kat}^{-1}$. Der CO - Umsatz im stationären Zustand betrug 14 %, die erhaltenen Selektivitäten sind in Tabelle 1 aufgeführt.

**Beispiel 2:**

Die Herstellung und Aktivierung des Katalysators und die Reaktionsdurchführung in Beispiel 2 erfolgte analog zu den Angaben in Beispiel 1. Der Versuch wurde bei 11 bar Druck, 220 °C und mit Synthesegas, bestehend aus 2 Teilen $H_2$ und 1 Teil CO durchgeführt. Die Katalysatorbelastung betrug dabei während der gesamten Versuchsdauer 1,9 $l_{STP}\ h^{-1}\ g_{Kaf}^{-1}$. Der CO - Umsatz im stationären Zustand betrug 12 %, die erhaltenen Selektivitäten sind in Tabelle 1 aufgeführt.

**Beispiel 3:**

Die Herstellung und Aktivierung des Katalysators und die Reaktionsdurchführung in Beispiel 3 erfolgte analog zu den Angaben in Beispiel 1. Der Katalysator wurde so hergestellt, dass er die Zusammensetzung 5,4 Gew.-% Mn und 11 Gew.-% Co, jeweils bezogen auf die Gesamtmasse des Katalysators, aufwies. Der Versuch wurde bei 20 bar Druck, 210 °C und mit Synthesegas, bestehend aus 2 Teilen $H_2$ und 1 Teil CO durchgeführt. Die Katalysatorbelastung betrug dabei während der gesamten Versuchsdauer 1,6 $l_{STP}$ $h^{-1}$ $g_{Kat}^{-1}$. Der CO - Umsatz im stationären Zustand betrug 13 %, die erhaltenen Selektivitäten sind in Tabelle 1 aufgeführt.

Tabelle 1:

Vergleich der Selektivitäten aus den Beispielen mit Literaturdaten für die (Fe-katalysierte) HTFT (SASOL Synthol Verfahren) und abgeschätzt für die Co-katalysierte LTFT (Shell Heavy Paraffin Synthesis). Von 100% abweichende Summen sind rundungsbedingt.

| | Beispiel 1 [Gew.c-%] ($\alpha$ = 0,72) | Beispiel 2 [Gew.c-%] ($\alpha$ = 0,75) | Beispiel 3 [Gew.c-%] ($\alpha$ = 0,68) | Literatur[1] HTFT [Gew.c-%] | Berechnet[2] LTFT [Gew.c-%] |
|---|---|---|---|---|---|
| Methan | 13 | 12 | 10 | 10 | 1 |
| Ethen | 2 | 1 | 1 | 4 | 0 |
| Ethan | 3 | 2 | 3 | 6 | 2 |
| Propen | 12 | 8 | 11 | 12 | 0 |
| Propan | 5 | 3 | 4 | 2 | 2 |
| Butene | 10 | 8 | 9 | 8 | 0 |
| Butan | 5 | 3 | 5 | 1 | 3 |
| $Cr_5$-$Cr_{11}$ | 34 | 39 | 32 | 39 | 26 |
| $C_{12}$-$C_{18}$ | 5 | 14 | 5 | 5 | 24 |
| $C_{19}$-$C_{21}$ | 1 | 1 | 0 | 1 | 8 |
| $C_{22}$-$C_{30}$ | 1 | 1 | 0 | 3 | 17 |
| $C_{31+}$ | 0 | 0 | 0 | 2 | 17 |
| $CO_2$ | <1 | <1 | <1 | k.A. | k.A. |
| O-haltige Verbindungen | 10 | 7 | 17 | 7 | k.A |

1 de Klerk, A; Fischer-Tropsch Refining. Wiley-VCH, 2011
2 Berechnet aus ASF für $\alpha$ = 0,9 und C-Zahlen < 100

Man erkennt aus den Vergleichszahlen, speziell z. B. den Selektivitäten zu Propen, den Butenen und langkettigen Produkten, dass in diesen Beispielen bei LTFT-Bedingungen ein Produkt gewonnen wurde, welches wie das Produkt der HTFT (T > 300 °C) fast ausschließlich aus bei Raumtemperatur und -druck gasförmigen und flüssigen Bestandteilen besteht und reich an Olefinen ist. Bei der LTFT hingegen entsteht ein Produkt welches über 35 Gew.-% bei RT feste Komponenten enthält.

## Patentansprüche

1. Fischer-Tropsch-Verfahren zur Synthese von Kohlenwasserstoffen, umfassend das Inkontaktbringen von Synthesegas mit mindestens einem Katalysator unter einem Gesamtdruck zwischen 1 und 100 bar, bei einer Temperatur zwischen 180 und 250 °C, wobei der Katalysator Co und Mn sowie einen oxidischen Träger enthält.

2. Verfahren gemäß Anspruch 1, **dadurch gekennzeichnet, dass** der Katalysator neben Co und Mn keine weiteren katalytisch aktiven Metalle oder Promotoren enthält.

**3.** Verfahren gemäß Anspruch 1 oder 2, **dadurch gekennzeichnet, dass** der Katalysator nur aus Co, Mn und Siliziumoxid besteht.

**4.** Verfahren gemäß einem oder mehreren der Ansprüche 1 bis 3, **dadurch gekennzeichnet, dass** der Co-Gehalt bei 5 bis 50 Gew.-% beträgt, bezogen auf den Katalysator und bestimmt als Metall.

**5.** Verfahren gemäß einem oder mehreren der Ansprüche 1 bis 4, **dadurch gekennzeichnet, dass** der Gehalt an Mn 5 bis 55 Gew.-% beträgt, bezogen auf den Gehalt an Co und bestimmt als Metall.

**6.** Verfahren zur Herstellung oxygenierter Produkte, umfassend die Verfahrensschritte:

a) Durchführen eines Fischer-Tropsch-Verfahrens gemäß einem oder mehreren der Ansprüche 1 bis 5, umfassend das Inkontaktbringen von Synthesegas mit mindestens einem Katalysator unter einem Gesamtdruck zwischen 1 und 100 bar, bei einer Temperatur zwischen 180 und 250 °C, wobei der Katalysator Co und Mn sowie einen oxidischen Träger enthält
b) gegebenenfalls Aufreinigung der erhaltenen Kohlenwasserstoffe
c) Durchführen einer Hydroformylierung mit Kohlenmonoxid und Wasserstoff in Gegenwart einer katalytisch wirksamen Menge eines Hydroformylierungskatalysators unter Erhalt der oxygenierten Produkte.

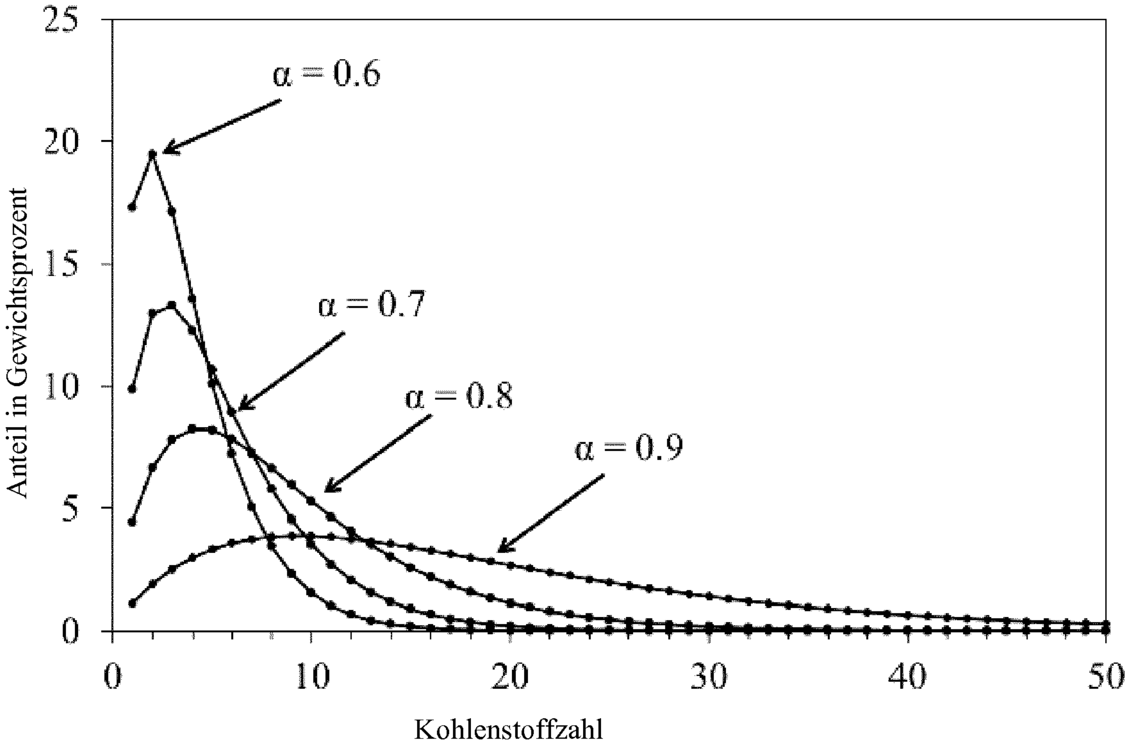
25
20
15
10
5
0
0
10
20
30
40
50
Anteil in Gewichtsprozent
Kohlenstoffzahl
α = 0.6
α = 0.7
α = 0.8
α = 0.9

Abbildung 1

Europäisches Patentamt
European Patent Office
Office européen des brevets

# EUROPÄISCHER RECHERCHENBERICHT

Nummer der Anmeldung
EP 18 16 5489

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X<br><br><br>Y | US 5 958 985 A (GEERLINGS JACOBUS JOHANNES COR [NL] ET AL)<br>28. September 1999 (1999-09-28)<br>* Beispiele 1-5; Tabelle 1 * | 1-5<br><br><br>6 | INV.<br>C10G2/00<br>C07C1/04 |
| X<br><br><br>A | US 2017/297006 A1 (VAN BAVEL ALEXANDER PETRUS [NL] ET AL)<br>19. Oktober 2017 (2017-10-19)<br>* Absätze [0127], [0130] * | 1-5<br><br><br>6 | |
| X<br><br>Y | DE 603 03 033 T2 (SHELL INT RESEARCH [NL])<br>3. August 2006 (2006-08-03)<br>* Absätze [0026], [0028], [0030] * | 1-5<br><br>6 | |
| X<br><br><br>Y | US 2004/214905 A1 (GEERLINGS JACOBUS JOHANNES COR [NL] ET AL)<br>28. Oktober 2004 (2004-10-28)<br>* Absätze [0061], [0063], [0070], [0071] * | 1-5<br><br><br>6 | |
| Y,D | WO 2009/080396 A1 (EVONIK OXENO GMBH [DE]; LUEKEN HANS-GERD [DE]; DREES STEFAN [DE]; KAIZ) 2. Juli 2009 (2009-07-02)<br>* Seite 12, Zeile 22/23; Anspruch 1 * | 6 | RECHERCHIERTE SACHGEBIETE (IPC)<br>C10G<br>C07C |

Der vorliegende Recherchenbericht wurde für alle Patentansprüche erstellt

2

| Recherchenort | Abschlußdatum der Recherche | Prüfer |
|---|---|---|
| Den Haag | 2. August 2018 | Galleiske, Anke |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR.

EP 18 16 5489

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

02-08-2018

| Im Recherchenbericht angeführtes Patentdokument | Datum der Veröffentlichung | Mitglied(er) der Patentfamilie | Datum der Veröffentlichung |
|---|---|---|---|
| US 5958985 A | 28-09-1999 | AU 718101 B2 | 06-04-2000 |
| | | CA 2274688 A1 | 18-06-1998 |
| | | DE 69711714 D1 | 08-05-2002 |
| | | DE 69711714 T2 | 18-07-2002 |
| | | DZ 2370 A1 | 28-12-2002 |
| | | EP 0966415 A1 | 29-12-1999 |
| | | ES 2175521 T3 | 16-11-2002 |
| | | ID 21757 A | 22-07-1999 |
| | | MY 118696 A | 31-01-2005 |
| | | NO 992860 A | 11-06-1999 |
| | | NZ 335515 A | 28-04-2000 |
| | | RU 2187486 C2 | 20-08-2002 |
| | | US 5958985 A | 28-09-1999 |
| | | WO 9825870 A1 | 18-06-1998 |
| | | ZA 9711090 B | 15-06-1998 |
| US 2017297006 A1 | 19-10-2017 | AU 2014295288 A1 | 04-02-2016 |
| | | CN 105531027 A | 27-04-2016 |
| | | EP 3024577 A1 | 01-06-2016 |
| | | RU 2016105852 A | 29-08-2017 |
| | | US 2016175821 A1 | 23-06-2016 |
| | | US 2017297006 A1 | 19-10-2017 |
| | | WO 2015010940 A1 | 29-01-2015 |
| DE 60303033 T2 | 03-08-2006 | AU 2003274689 A1 | 22-12-2003 |
| | | CA 2488236 A1 | 18-12-2003 |
| | | CN 1659256 A | 24-08-2005 |
| | | DE 60303033 T2 | 03-08-2006 |
| | | EP 1509581 A1 | 02-03-2005 |
| | | MX PA04012006 A | 07-03-2005 |
| | | MY 134279 A | 30-11-2007 |
| | | NZ 536250 A | 28-04-2006 |
| | | RU 2316530 C2 | 10-02-2008 |
| | | US 2005245619 A1 | 03-11-2005 |
| | | WO 03104355 A1 | 18-12-2003 |
| | | ZA 200408725 B | 22-02-2006 |
| US 2004214905 A1 | 28-10-2004 | AR 029551 A1 | 02-07-2003 |
| | | AT 274485 T | 15-09-2004 |
| | | AU 8192001 A | 14-01-2002 |
| | | AU 2001281920 B2 | 22-04-2004 |
| | | CA 2414710 A1 | 10-01-2002 |
| | | DE 60105162 D1 | 30-09-2004 |
| | | DE 60105162 T2 | 29-09-2005 |
| | | DZ 3373 A1 | 10-01-2002 |
| | | EP 1296914 A1 | 02-04-2003 |

EPO FORM P0461

Für nähere Einzelheiten zu diesem Anhang : siehe Amtsblatt des Europäischen Patentamts, Nr.12/82

## ANHANG ZUM EUROPÄISCHEN RECHERCHENBERICHT ÜBER DIE EUROPÄISCHE PATENTANMELDUNG NR.

EP 18 16 5489

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

02-08-2018

| Im Recherchenbericht angeführtes Patentdokument | Datum der Veröffentlichung | Mitglied(er) der Patentfamilie | Datum der Veröffentlichung |
|---|---|---|---|
| | | ES 2227249 T3 | 01-04-2005 |
| | | MX PA02012731 A | 14-05-2003 |
| | | NO 20030002 A | 02-01-2003 |
| | | NZ 523269 A | 30-04-2004 |
| | | US 2003153633 A1 | 14-08-2003 |
| | | US 2004214905 A1 | 28-10-2004 |
| | | WO 0202489 A1 | 10-01-2002 |
| | | ZA 200300068 B | 06-11-2003 |
| WO 2009080396 A1 | 02-07-2009 | AR 071277 A1 | 09-06-2010 |
| | | CN 101903318 A | 01-12-2010 |
| | | DE 102007061649 A1 | 02-07-2009 |
| | | EP 2188236 A1 | 26-05-2010 |
| | | ES 2442636 T3 | 12-02-2014 |
| | | TW 200946487 A | 16-11-2009 |
| | | US 2010249464 A1 | 30-09-2010 |
| | | WO 2009080396 A1 | 02-07-2009 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 2009080396 A
- DE 10009207
- WO 2017080690 A


### In der Beschreibung aufgeführte Nicht-Patentliteratur


- **FRANKE ; BÖRNER.** Hydroformylation Fundaments, Procceses and Applications in Organic Synthesis. Willey VCH Verlag GmbH & Co, vol. 1 & 2
- **J. FALBE.** New Syntheses with Carbon Monoxide. Springer-Verlag, 1980, 99
- **KIRK-OTHMER.** Encyclopedia of Chemical Technology. John Wiley & Sons, 1996, vol. 17, 902-919
- **DE KLERK, A.** Fischer-Tropsch Refining. Wiley-VCH, 2011